**Europäisches Patentamt**

(19) **European Patent Office**

**Office européen des brevets**

(11) Veröffentlichungsnummer: **0 012 871**
**B1**

(12) **EUROPÄISCHE PATENTSCHRIFT**

(45) Veröffentlichungstag der Patentschrift: **18.05.83**

(51) Int. Cl.³: **A 61 C 1/12, A 61 C 1/10**

(21) Anmeldenummer: **79104772.3**

(22) Anmeldetag: **29.11.79**

(54) Zahnärztliche Handstückanordnung.

(30) Priorität: **22.12.78 DE 2855874**

(43) Veröffentlichungstag der Anmeldung:
**09.07.80 Patentblatt 80/14**

(45) Bekanntmachung des Hinweises auf die Patenterteilung:
**18.05.83 Patentblatt 83/20**

(84) Benannte Vertragsstaaten:
**AT CH FR GB IT SE**

(56) Entgegenhaltungen:
**DE - A - 2 431 472**
**DE - A - 2 800 358**
**DE - B - 2 334 448**
**DE - B - 2 633 223**

(73) Patentinhaber: **SIEMENS AKTIENGESELLSCHAFT**
**Berlin und München Wittelsbacherplatz 2**
**D-8000 München 2 (DE)**

(72) Erfinder: **Worschischek, Rainer**
**Magnolienstrasse 57**
**D-6143 Lorsch (DE)**
Erfinder: **Schuss, Werner**
**In der Lahrbach 18**
**D-6148 Heppenheim (DE)**

Courier Press, Leamington Spa, England.

Zahnärztliche Handstückanordnung

Die Erfindung bezieht sich auf eine zahnärztliche Handstückanordnung mit einem Antriebsmotor und einem axial an diesen ankuppelbaren und gegen den Antriebsmotor verdrehbaren Handstückteil, welches ein Kopfgehäuse zur Aufnahme eines Werkzeuges und ein sich daran anschließendes Halsteil enthält, und welches an dem dem Kopfgehäuse abgewandten Ende eine Außenhülse bildet, in die eine Innenhülse eingreift, welche einen die Triebwelle des Antriebsmotors mit Triebwellenabschnitten im Halsteil und Kopfgehäuse verbindenden weiteren Triebwellenabschnitt enthält, mit Kühlmittelleitungsabschnitten im Antriebsmotor, in der Innenhülse und im Halsteil zur Übertragung von wenigstens einem Kühlmittel vom Antriebsmotor an das Kopfgehäuse, sowie mit einer Drehkupplung zwischen den Kühlmittelleitungsabschnitten des Antriebsmotors und des diesem benachbarten Handstückteiles in Form einer Konzentrisch angeordneten Ringnut im einen und einem mit dieser korrespondierenden und in diese mündenden Zu- oder Ableitungskanal im anderen der gegeneinander verdrehbaren Teile.

Bei einer bekannten Handstückanordnung (DE—A1—24 31 472) ist das Handstück als Ganzes, also einschließlich Kopfteil und Griffstück und sämtlicher Triebwellenabschnitte und Lager mit dem Antriebsmotor leicht lösbar verbunden. Die Verbindung erfolgt mittels einer Ringnutrastung, die einerseits eine Drehbarkeit und andererseits eine axiale Fixierung des Handstückes gegenüber dem Antriebsmotor gewährleistet. Die Kühlmittelübertragung vom Antriebsmotor auf das Handstück erfolgt dabei inkorporiert, d.h. innerhalb der betreffenden Handstückteile, wobei zur Übertragung der Kühlmittel an der Drehstelle eine Drehkupplung vorgesehen ist. Beim Trennen des Handstückes vom Antriebsmotor wird auch die Drehkupplung gelöst. Diese besteht im wesentlichen aus einer durch O-Ringe beidseitig abgedichteten Ringnut für jedes Kühlmittel am einen Teil, z.B. am Führungsschaft, welcher die Antriebswelle des Antriebsmotors umgibt, und einem mit der Ringnut korrespondierenden axialen oder radialen Kanal am anderen Teil, z.B. am Handstück. Auch eine vertauschte Anordnung der Drehkupplungsteile, also Ringnut am Handstück und axialer oder radialer Kanal am Antriebsmotor, ist möglich.

Das in der Praxis sehr häufig durchzuführende An- und Abkuppeln des Handstückes führt zwangsläufig zu einem starken Verschleiß der Drehkupplungsteile, insbesondere der O-Ring-Dichtungen. Im abgekuppelten Zustand besteht außerdem die Gefahr, daß in die Öffnungen der Drehkupplung Schmutz eindringen und so der Kühlmittelleitungsfluß beeinträchtigt oder gas unterbrochen werden kann.

Dieser Nachteil ist zwar bei einer anderen bekannten Handstückanordnung (DE—B2—26 33 223) nicht gegeben; hier tritt jedoch im Hinblick auf die geforderte Sterilisierbarkeit des Handstückes ein anderes Problem auf. Bei der bekannten Konstruktion besteht das auf den Antriebsmotor aufsteckbare Handstück im wesentlichen aus zwei gegeneinander verdrehbaren Teilen, einem das Kopfgehäuse mit Halsteil enthaltenden ersten Handstückteil, welches dem dem Kopfgehäuse abgewandt eine Außenhülse bildet, in der konzentrisch eine weitere Hülse drehbar angeordnet ist, welche die Lagerung eines beim Aufstecken des Handstückes an den Antriebsmotor mit der Antriebswelle in Eingriff kommenden Triebwellenabschnittes aufnimmt und ferner den einen Teil der Drehkupplung enthält, deren anderer Teil sich in der Außenhülse befindet. Bei einem Sterilisieren des kompletten Handstückes im Autoklaven werden nicht nur die Dichtringe und Lagerabstützringe der Drehkupplung, sondern auch die häufig vorhandenen Klebestellen, die Lager selbst und die Lagerschmierstoffe den hohen Temperaturen ausgesetzt, mit der Folge, daß die Dicht- und Stützringe vorzeitig altern und spröde werden, daß die Klebestellen nicht die dauerhafte Verbindung zeigen, und daß die Schmierstoffe in den Lagern bei der Sterilisation weitgehend ausgewaschen werden und praktisch nach jeder Sterilisation neu eingebracht werden müssen.

Aufgabe der Erfindung ist es, demgegenüber eine verbesserte Handstückanordnung zu schaffen, mit dem Ziel, eine Reduzierung der mechanischen und thermischen Belastung der dem Verschleiß unterworfenen Teile zu erreichen und damit einer vorzeitigen Alterung der Dichtringe und einem Ausfall der Lager durch "Auswaschen" der Schmiermittel vorzubeugen.

Die gestellte Aufgabe wird bei einer zahnärztlichen Handstückanordnung der eingangs genannten Art gemäß der Erfindung dadurch gelöst, daß die Innenhülse, der in ihr gelagerte Triebwellenabschnitt und der in ihr verlaufende Kühlmittelleitungsabschnitt am Antriebsmotor drehbar und für den gewöhnlichen Gebrauch axial unlösbar angeordnet sind, daß die Drehkupplungsteile an Ringflächen einerseits einer Führungshülse des Antriebsmotors und andererseits der Innenhülse angeordnet sind, und daß Kopfgehäuse, Halsteil und Außenhülse mittels einer betriebsmäßig lösbaren Rastvorrichtung mit der gegen den Antriebsmotor verdrehbaren Innenhülse drehfest und gegen unbeabsichtigtes Abgleiten gesichert, verbunden sind, und daß die Enden der Kühlmittelleitungsabschnitte der Innenhülse einerseits und des Halsteiles andererseits lösbar verbunden sind, wobei Dichtmittel vorhanden sind, welche die Kühlmittelleitungsabschnitte dichtend miteinander verbinden. Mit "betriebsmäßig lösbar" ist dabei ein Lösen der Teile gemeint, das der Arzt selbst ohne Zuhilfenahme von Werkzeugen vornehmen kann.

Wesentliche Vorzüge der Erfindung sind, daß die Drehkupplungsteile nicht mehr bei jedem Ab- und Akuppeln des auszuwechselnden Handstückteiles in axialer Richtung auf Scherung belastet werden, daß die Mediumübergabestelle an der Drehkupplung beim Auswechseln des Handstückteiles geschlossen bleibt und somit vor Eindringen von Staub und Schmutz geschützt ist, und daß, nachdem praktisch der antriebsseitige Triebwellenabschnitt mit den zugehörigen Lagern, der entsprechende Kühlmittelleitungsabschnitt und die komplette Drehkupplung einschließlich der Dichtringe für sämtliche Handstückversionen nur einmal vorhanden zu sein brauchen, wesentliche Teile des Handstückes nunmehr nicht jedesmal ausgewechselt zu werden brauchen, wenn ein Kopfteil mit einem anderen Unter- und Übersetzungsgetriebe verwendet werden soll.

Zum Sterilisieren braucht lediglich das werkzeugseitige Handstückteil mit dem Kopfgehäuse und der Hülse vom Antriebsmotor abgezogen zu werden.

Vorteilhafte Ausgestaltungen und Weiterbildungen sind in den abhängigen Ansprüchen enthalten. Ein Ausführungsbeispiel der Erfindung wird nachfolgend anhand der Zeichnung näher erläutert.

Es zeigen:

Fig. 1 eine zahnärztliche Handstückanordnung in schaubildlicher Darstellung,

Fig. 2 einen Teil der in Fig. 1 dargestellten Handstückanordnung im Längsschnitt,

Fig. 3 einen Teil der in Fig. 2 dargestellten Handstückanordnung mit einem anderen Kopfteil.

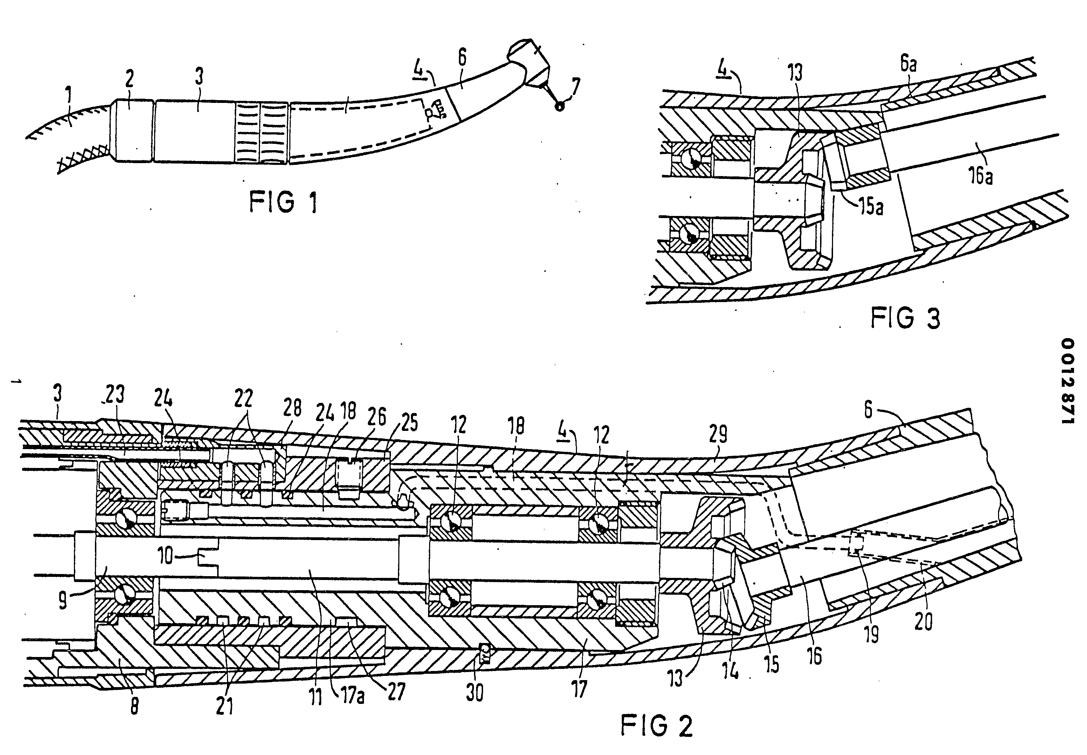

Die Fig. 1 zeigt in einer schaubildlichen Darstellung eine zahnärztliche Handstückanordnung mit einem an einen Versorgungsschlauch 1 über eine Anschlußarmatur 2 angeschlossenen Antriebsteil 3 (Elektrokleinstmotor), an dem sich ein mit 4 bezeichnetes Handstück anschließt, welches ein Kopfgehäuse mit einem drehbar darin gelagerten Werkzeug 7 und ein sich an das Kopfgehäuse anschließendes Halsteil 6 enthält.

Die Fig. 2 zeigt enen Teil des Antriebsteiles 3 und der sich daran anschließenden Handstückteile im Längsschnitt. Die im Antriebsgehäuse 8 gelagerte Motorwelle 9 ist über eine Klauenkupplung 10 mit einem Triebwellenabschnitt 11 verbunden, welcher in Lagern 12 gelagert ist und an seinem freien Ende ein Triebzahnradpaar 13 und 14 enthält. Das Triebzahnrad 14 steht in Eingriff mit einem Zahnrad 15 eines im Halsteil 6 gelagerten Triebwellenabschnittes 16.

Das andere Triebzahnrad 13 kommt — wie aus Fig. 3 ersichtlich — bei Aufsetzen eines anderen Handstückes mit einem anderen Kopf-und Halsteil und einem anderen Über- oder Untersetzungsgetriebe in Eingriffe mit einem entsprechend ausgebildeten Triebzahnrad 15a des Triebwellenabschnittes 16a dieses Handstückes.

Die Lager 12 werden von einer Innenhülse 17 aufgenommen, in der ein Kühlmittelleitungsabschnitt 18 angeordnet ist, der einerseits über eine durch eine O-Ring-Dichtung abgedichtete Steckkupplung 19 mit einem im Halsteil 6 angeordneten Kühlmittelleitungsabschnitt 20 und andererseits über konzentrisch angeordnete Ringkanäle 21 und radiale Zufuhrkanäle 22 mit einem Kühlmittelleitungsabschnitt 23 des Antriebsteils 3 ver-bunden ist. Zur Abdichtung der Ringkanäle 21 und der mit ihnen korrespondierenden Radialkanäle 22 sind in bekannter Weise O-Ring-Dichtungen 24 vorhanden. Die gegenüber abgedichteten Ringkanäle 21 und die mit ihnen korrespondierenden radialen Zufuhrkanäle 22 stellen zusammen mit Führungsteilen 26, 27, welche die Drehbarkeit der Hülse 17 gegenüber einer Führungshülse 25 gewährleisten, eine Drehkupplung für die Kühlmittelübergabe vom Antriebsteil auf das Handstück dar.

Die Drehkupplung kann, je nachdem, wie viele Kühlmedien und in welcher Form, ob gemeinsam oder getrennt, diese zum Kopfteil des Handstückes geführt werden sollen, entsprechend ausgebildet sein. Sollen z.B. zwei Medien getrennt bis zum Kopfgehäuse geführt werden, so sind selbstverständlich zwei getrennte Kühlmittelleitungsabschnitte 18 in der Innenhülse 17 vorzusehen, die dann über separate radiale Kanäle 22 mit separaten Kühlmittelleitungsabschnitten 23 im Motorteil verbunden sind.

Die Innenhülse 17 ist mit einem Abschnitt 17a in der mit dem Motorgehäuse 8 fest verbundenen oder verschraubten Führungshülse 25, drehbar geführt; hierzu und auch zur axialen Festlegung der beiden Hülsen ist ein Führungsstift 26 vorhanden, der in eine entsprechende Nut 27 in der Innenhülse 17 eingreift und so ein axiales Abgleiten der Innenhülse von dem Antriebsteil verhindert.

Die beiden radialen Kanäle 22 und ein beide Kanäle verbindender Querkanal des Kühlmittelleitungsabschnittes 23 sind in einem Einsatzteil 28 enthalten, das in der Führungshülse 25 angeordnet ist.

Die Teile 17 mit den Triebwellenteilen 11, 13 und 14 und 25, 18 bilden eine dem Antriebsteil zugeordnete un dzum Zwecke von Servicearbeiten zweckmäßigerweise lösbare Einheit, auf die das Halsteil 6 mit der daran befestigten Schutzhülse 29 aufgeschoben ist. Im Gegensatz zu der nachfolgend genannten Rastung 30 kann die Verbindung der beiden Hülsen 17 und 25 nicht betriebsmäßig, sondern nur mit Hilfe von Werkzeugen gelöst werden. Die Schultzhülse 29 übergreift die gesamten antriebsseitigen, aus dem Motorgehäuse vorstehenden Teile und ist mittels einer mit 30 angedeuteten Rasteinrichtung verdrehsicher, jedoch betriebsmäßig wieder lüsbar, mit der Innenhülse 17 verbunden. Als Rasteinrichtung kann z.B. in bekannter Weise eine Kugelrastung mit einer zusätzlichen Verdrehsicherung, beispielsweise in Form eines in einer Längsnut geführten Bolzens oder auch eine Rastvorrichtung, wie sie in der DE—A1—2855682 beschrieben ist, vorgesehen sein. Zum Lösen des Handstückes 4 vom Antriebsteil 3 braucht lediglich die Rasteinrichtung 30 durch axiales Auseinanderziehen der Teile entriegelt zu werden. Nach Abziehen des Handstückes bleiben die dem Antrieb zugeordneten Teile, also die Führungshülse 25 mit dem Einsatzteil 28, die Innenhülse 17 mit dem Triebwellenabschnitt 11 und den Lagern 12 am Antriebsteil 3; diese Teile bleiben also vom An- und Abkuppelvorgang unberührt.

In vorliegenden Ausführungsbeispiel ist die Triebwelle 9 über eine Klauenkupplung 10 mit dem Triebwellenabschnitt 11 verbunden. Anstelle der Zweiteilung kann vorteilhafterweise auch eine durchgehende einteilige Triebwelle vorgesehen werden, über die z.B. eine fest mit dem Motorgehäuse 8 verbundene Innenhülse angeordnet sein kann, die den einen Teil der Drehkupplung aufnimmt und über die dann eine demgegenüber drehbare und den anderen Teil der Drehkupplung aufnehmende Außenhülse greifen kann, wobei letztere von der Innenhülse zwar nicht betriebsmäßig, jedoch mit Hilfe eines Werkzeuges zu Servicezwecken trennbar ist.

**Patentansprüche**

1. Zahnärztliche Handstückanordnung mit einem Antriebsmotor (3) und einem axial an diesen ankuppelbaren und gegen den Antriebsmotor (3) verdrehbaren Handstückteil (4), welches ein Kopfgehäuse zur Aufnahme eines Werkzeuges (7) und ein sich daran anschließendes Halsteil (6) enthält, und welches an dem dem Kopfgehäuse abgewandten Ende eine Außenhülse (29) bildet, in die eine Innenhülse (17) eingreift, welche einen die Triebwelle (9) des Antriebsmotors mit Triebwellenabschnitten (16) im Halsteil und Kopfgehäuse verbindenden weiteren Triebwellenabschnitt (11) enthält, mit Kühlmittelleitungsabschnitten (23, 18, 20) im Antriebsmotor, in der Innenhülse und im Halsteil zur Übertragung von wenigstens einem Kühlmittel vom Antriebsmotor (3) an das Kopfgehäuse, sowie mit einer Drehkupplung zwischen den Kühlmittelleitungsabschnitten (23, 18) des Antriebsmotors (3) und des diesem benachbarten Handstückteils (4) in Form einer konzentrisch angeordneten Ringnut (21) im einen (17) und einem mit dieser korrespondierenden und in diese mündenden Zu- oder Ableitungskanal (22) im anderen (25) der gegeneinander verdrehbaren Teile (17, 25), dadurch gekennzeichnet, daß die Innenhülse (17), der in ihr gelagerte Triebwellenabschnitt (11) und der in ihr verlaufende Kühlmittelleitungsabschnitt (18) am Antriebsmotor (3) drehbar und für den gewöhnlichen Gebrauch axial unlösbar angeordnet sind, daß die Drehkupplungsteile (21, 22, 24) an Ringflächen einerseits einer Führungshülse (25) des Antriebsmotors (3) und andererseits der Innenhülse (17) angeordnet sind, und daß Kopfgehäuse, Halsteil (6) und Außenhülse (29) mittels einer betriebsmäßig lösbaren Rastvorrichtung (30) mit der gegen den Antriebsmotor verdrehbaren Innenhülse (17) drehfest und gegen unbeabsichtigtes Abgleiten gesichert, verbunden sind, und daß die Enden der Kühlmittelleitungsabschnitte (18, 20) einerseits der Innenhülse (17) und andererseits des Halsteiles (6) lösbar miteinander verbunden sind, wobei Dichtmittel vorhanden sind, welche die Kühlmittelleitungsabschnitte (18, 20) dichtend miteinander verbinden.

2. Handstückanordnung nach Anspruch 1, dadurch gekennzeichnet, daß die konzentrisch zur Antriebswelle (9) des Antriebsmotors (3) angeordnete Innenhülse (17), welche den Triebwellenabschnitt (11) mit den zugehörigen Lagern (12) sowie wenigstens einen Ringkanal (21) und wenigstens einen mit diesem verbundenen Kühlmittelleitungsabschnitt (18) aufnimmt, mit einem Abschnitt (17a) in die am Motorgehäuse (8) angeordnete Führungshülse (25) eingreift und durch Führungsglieder (26, 27) drehbar geführt und gegen axiales Abgleiten gesichert ist, und daß die Führungshülse (25) einen radial in den Ringkanal (21) mündenden Zuführungskanal (22), welcher mit dem Kühlmittelleitungsabschnitt (23) des Antriebsmotor (3) verbunden ist, enthält.

3. Handstückanordnung nach Anspruch 1, dadurch gekennzeichnet, daß eine bis zum Triebwellenabschnitt (16) des das Kopfgehäuse mit dem Halsteil (6) enthaltenden Handstückteils (4) reichende einstückige Triebwelle (9, 11) vorhanden ist, über die eine mit dem Motorgehäuse (8) fest verbundene Innenhülse angeordnet ist, die den einen Teil der Drehkupplung (21, 22, 24) aufnimmt, und über die Innenhülse eine dergegenüber drehbare und von dieser abnehmbare Außenhülse greift, welche den anderen Teil der Drehkupplung enthält, auf der das Handstückteil (4) betriebsmäßig lösbar angeordnet ist.

**Revendications**

1. Agencement pour pièce à main de dentisterie, comprenant un moteur d'entraînement (3) et une partie formant pièce à main (4), qui peut être accouplée axialement au moteur d'entraînement (3), qui peut tourner par rapport à celui-ci, qui comporte un boîtier de tête pour la réception d'un outil (7) et une partie formant manche (6) s'y raccordant et qui forme à l'extrémité éloignée du boîtier de tête une douille extérieure (29), dans laquelle est enfilée une douille intérieure (17) qui contient une autre section d'arbre d'entraînement (11) reliant l'arbre d'entraînement (9) du moteur d'entraînement à des sections d'arbre d'entraînement (16) dans la partie formant manche et dans le boîtier de tête, des sections de conduit pour un agent réfrigérant (23, 18, 20) dans le moteur d'entraînement, dans la douille intérieure et dans le manche pour le transfert d'au moins un agent réfrigérant du moteur d'entraînement (3) au boîtier de tête, ainsi qu'un accouplement de rotation entre les sections de conduit pour l'agent réfrigérant (23, 18) du moteur d'entraînement (3) et de la partie formant pièce à main (4) adjacente, sous forme d'une gorge annulaire (21), ménagée concentriquement dans l'une (17) des parties (17, 25) qui peuvent tourner l'une par rapport à l'autre, et d'un canal d'amenée ou d'évacuation (22), correspondant à cette gorge et débouchant dans celle-ci et ménagé dans l'autre partie (25, caractérisé en ce que la douille intérieure (17), la section d'arbre d'entraînement (11) qui y est montée et la section de conduit pour l'agent réfrigérant (18) qui y passe sont montées tournantes et sans possibilité d'être débloquées axialement pour l'usage habituel, en ce que les parties de l'accouplement de rotation (21, 22, 24) sont disposées sur les surfaces annulaires d'une part d'une douille de guidage (25) du moteur d'entraînement (3) et d'autre part de la douille intérieure (17) et en ce que le boîtier de tête, la partie formant manche (66) et la douille extérieure (29) sont, à l'aide d'un dispositif d'encliquetage (30) détachable en utilisation, reliées de manière à être solidaires en rotation de la douille intérieure (17) qui peut tourner par rapport au moteur d'entraînement et à être empêchées de glisser fortuitement, et en ce que les extrémités des sections de conduit pour l'agent réfrigérant (18, 20) d'une part de la douille intérieure (17) et d'autre part de la partie formant manche (6) sont reliées l'une à l'autre de manière détachable, avec présence de moyens d'étanchéité qui font communiquer, avec étanchéité, les sections de conduit pour l'agent réfrigérant (18, 20) l'une avec l'autre.

2. Agencement de pièce à main suivant la revendication 1, caractérisé en ce que la douille intérieure (17), qui est disposée concentriquement à l'arbre d'entraînement (9) du moteur d'entraînement (3) et qui reçoit la section de l'arbre d'entraînement (11) avec les paliers (12) qui en font partie, ainsi qu'au moins un canal annulaire (21) et au moins une section de conduit pour l'agent réfrigérant (18) communiquant avec ce canal, pénètre par une section (17a) dans la douille de guidage (25) disposée sur le carter du moteur (8) et est guidée avec possibilité de tourner et est empêchée de glisser axialement par des éléments de guidage (26, 27), et en ce que la douille de guidage (25) comprend un canal d'amenée (22), qui débouche radialement dans le canal annulaire (21) et qui communique avec la section de conduit pour l'agent réfrigérant (23) du moteur d'entraînement (3).

3. Agencement de pièce à main suivant la revendication 1, caractérisé en ce qu'il y a un arbre d'entraînement (9, 11), d'une seule pièce, qui va jusqu'à la section de l'arbre d'entraînement (16) de la partie de la pièce à main (4) contenant le boîtier de tête avec la partie formant manche (6), et sur lequel est disposée une douille intérieure reliée rigidement au carter du moteur (8) et recevant l'une des parties de l'accouplement de rotation (21, 22, 24), et sur la douille intérieure est en prise une douille extérieure, qui peut tourner par rapport à la douille intérieure, qui peut être détachée de celle-ci et qui comporte l'autre partie de l'accouplement de rotation sur laquelle la partie formant pièce à main (4) est disposée de manière détachable en utilisation.

## Claims

1. A dental hand tool arrangement comprising a drive motor (3) and a hand tool component (4) which can be axially coupled to the latter and rotated relative to the drive motor (3) and which includes a head housing to accommodate a tool (7) and also includes an adjoining neck portion (6), and which component forms an outer sleeve (29) at the end facing away from the head housing, into which sleeve there engages an inner sleeve (17) which contains a further drive shaft section (11) which serves to connect the drive shaft (9) of the drive motor to drive shaft components (16) in the neck portion and the head housing, said arrangement also comprising coolant line sections (23, 18, 20) in the drive motor, the inner sleeve and the neck component, serving to convey at least one coolant from the drive motor (13) to the head housing, and further comprising a rotary coupling between the coolant line sections (23, 18) of the drive motor (3) and the adjacent hand tool component (4), in the form of a concentrically arranged annular groove (21) in the one (17) of components (17, 25) which may be rotated relative to one another, and a supply or discharge channel (22), which corresponds with said annular groove and opens into the latter, in the other (25) of said components (17, 25), characterised in that the inner sleeve (17), the drive shaft section (11) mounted therein, and the coolant line section (18) which is arranged in the latter, can be rotated relative to the drive motor (3), and for normal use are arranged so as to be axially separable; that the rotary coupling components (21, 22, 24) are arranged on annular surfaces of, on the one hand, a guide sleeve (25) of the drive motor (3) and, on the other hand, of the inner sleeve (17); that the head housing, neck portion (6), and outer sleeve (29), are connected by means of a locking device (30), which can be released during operation, to the inner sleeve (17) which can be rotated relative to the drive motor, so as to be prevented from rotating and safeguarded against unintentional slipping; and that the ends of the coolant line sections (18, 20) of the inner sleeve (17), on the one hand, and of the neck component (6), on the one hand, are detachably connected to one another, sealing means being provided to connect the coolant line sections (18, 20) to one another in sealed manner.

2. A hand tool arrangement according to Claim 1, characterised in that the inner sleeve (17), which is arranged concentrically with respect to the drive shaft (9) of the drive motor (3) and which accommodates the drive shaft section (11) with associated bearings (12), at least one annular channel (21) and at least one coolant pipeline section (18) which is connected to the latter, engages at a section (17a) into the guide sleeve (25) which is arranged on the motor housing (8) and is guided by guide elements (26, 27) so as to be rotatable but prevented from axial slipping; and that the guide sleeve (25) contains a supply channel (22) which opens radially into the annular channel (21) and which is connected to the coolant line section (23) of the drive motor (3).

3. A hand tool arrangement according to Claim 1, characterised in that an integral drive shaft (9, 11) is provided which extends to the drive shaft section (16) of the hand tool component (4) which contains the head housing together with the neck portion (6), and above which is arranged an inner sleeve which is permanently connected to the motor housing (8) and which accommodates one part of the rotary coupling (21, 22, 24), and over the inner sleeve, there engages an outer sleeve which can be rotated relative to the inner sleeve and removed from the inner sleeve and which contains the other part of the rotary coupling upon which the hand tool component (4) is arranged so as to be detachable during operation.

FIG 1

FIG 2

FIG 3